# EUROPEAN PATENT SPECIFICATION

(11) **EP 0 875 152 B1**
(45) Date of publication and mention of the grant of the patent: **19.03.2003**
(21) Application number: 98201317.9
(22) Date of filing: 23.04.1998
(51) Int. Cl.: A23D 9/00, A23D 7/00, A21D 2/16, A21D 13/08

(54) **Low SAFA puff pastry fats**
Blätterteigfette mit niedrigem Gehalt an gesättigten Fettsäuren
Graisses à basse teneur en acides gras saturés pour pâtes feuilletées

(30) Priority: 02.05.1997 EP 97201369
(43) Date of publication of application: 04.11.1998
(73) Proprietor: CSM Nederland B.V., 1112 XE Diemen (NL)
(72) Inventor: de Man, Teunis, c/o Unilever Res. Vlaardingen, 3133 AT Vlaardingen (NL)
(74) Representative: Jorritsma, Ruurd

(56) References cited:
- WO-A-91/18067
- WO-A-94/19953
- WO-A-95/30336
- DATABASE WPI Section Ch, Week 9315 Derwent Publications Ltd., London, GB; Class D13, AN 93-121655 XP002043010 -& JP 05 059 392 A (FUJI OIL CO LTD) , 9 March 1993
- PATENT ABSTRACTS OF JAPAN vol. 016, no. 269 (C-0952), 17 June 1992 -& JP 04 066045 A (KANEGAFUCHI CHEM IND CO LTD), 2 March 1992
- DATABASE WPI Section Ch, Week 8328 Derwent Publications Ltd., London, GB; Class D13, AN 83-708545 XP002043011 -& JP 58 094 345 A (KAO CORP) , 4 June 1983

## Description

In our patent application WO 94/19953 we have disclosed bakery fats that can be applied for puff pastries or as part of a dough, which fats comprise 5-50 wt% of S2U triglycerides, more than 35 wt% (U2S+U3) triglycerides, 0-37 wt% S3 triglycerides, while its SAFA content is less than 40 wt%, its trans content is less than 5 wt% and the fats display a solid fat content (non stabilised: by NMR-pulse) at 20 °C of more than 10. The saturated fatty acid group S comprises 12-24 carbon atoms.

Although above fats perform well, when applied in doughs, the fats still have one main draw back, i.e. the fats do not give the optimal hardness for a puff pastry fat. This is due to the absence of sufficient structuring fat components with a low SAFA content. Moreover the fats display a hardness that is very much temperature dependent. For optimal use it would be ideal if the fats would display a hardness that is more or less constant over the temperature range where pastry could be made, i.e. from about 15 to 30°C. Such a fat could then be used under all the different temperature conditions that exist in different countries or in the different seasons within one country without having to regulate the temperature of the space wherein the puff pastries are made. Another limiting factor of the disclosures of WO'953 is that if behenic is present in the fat composition as e.g. is the case in example 3 the behenic is incorporated as part of S2U and/or SU2 fats present in the composition.

From WO 95 30 366 fat compositions are known that are fully hardened fats with the following fatty acid composition:

| | |
|---|---|
| C12 | 9-45 % |
| C14 | 1- 5 % |
| C16 | 3- 7 % |
| C18 | > 40 % |

others up to 10 %, while the triglyceride distribution is:

| | |
|---|---|
| H3 | 0-35 % |
| HHM | 20-80 % |
| MHM | 10-60 % and |
| M3 | 0-10 %. |

These fats are developed for use in spreads.Nothing is disclosed about its use in puff pastry fats,which is understandable because fats for spreads and fats for puff pastry have to fulfil completely different requirements, in particular wrt hardness.

In example 4 it is disclosed that the hardstock fats can be blended with liquid oils in amounts of 9 or 82 %. A calculation of the fat compositions disclosed in example 4 (ie blends of 91 hard fat and 9 % liquid oil respectively 18 % hard fat and 82 % liquid oil reveals that the fat blends obtained in this example 4 do not meet the requirements for our fats. Its C20+ saturated fatty acid content eg is too low, and/or its liquid oil content is too high,and/or its H2M+H3 content is too low.

Therefore our fat compositions are novel over the disclosure of this document. As the application of the fat or fat blends in this WO 336 is different from our application, this document does not give any teaching of how the problems could be solved that we set out above.

According to our WO 93/24017 cookie dough fats can be made that comprise the following ingredients:
A.5.5-95 wt% of (H2M+M2H)
B.0-94.5 wt% of liquid oil and
C.0-94.5 wt% of a fat with an N20>15,
while the total of (B+C) is more than 0 and the fat mix displays an N20=15-55 and an N30=2-30
H in above compositions meaning saturated fatty acids with at least 16 carbon atoms. The consequence of above formulation is that if behenic would be present in the fat composition this behenic would be part of the H2M+M2H component. Moreover the examples that come the closest to the compositions of our new invention, i.e. examples 6 and 7 disclose a blend of 30 % H2M+M2H and 70% of a palm olein fraction which has a SAFA content of about 61 wt%, which is far too high for the modern requirements of what is considered as a healthy fat blend. Moreover nothing can be found in this document about the use of the fats for puff pastry purposes.

In our WO 95/07619 we have disclosed healthy fats that are suitable for application in spreads. The fats comprise 5-45 wt% of S2U triglycerides, 0-60 wt% of SU2 triglycerides, 5-95 wt% of U3 triglycerides and 0-8 wt% of S3 triglycerides, wherein S can be saturated fatty acid with 16-24 C-atoms. The compositions according to this WO'619 display a SAFA content of less than 35 % and an N5=12-30, an N35 less than 7 and an N5-N20 of less than 10. Moreover the fats contain less than 5 % diglycerides and have a ratio (C18-C24)/C16 of at least 0.3.

As components that contain behenic acid and that can be used are indicated BOO, BOB, BBO, BBLn, BLnB, PBLn, PBO etc. In the table wherein useful fat blends are mentioned only fats, that contain behenic acid as BlnB and BOB are indicated.
In this document no indication can be found about the use of the fats as puff pastry fat. Moreover the compositions require the presence of a minimum amount of the S2U component, while nothing is indicated about the hardness of the fats. It should however be expected,because of the aimed use as a spread fat, that the hardness of these fats will be rather low i.e. at least at a level inappropriate for application as a laminating fat.

Fats that contain appreciable amounts of behenic acid are further part of our patent applications WO 95/14392 and EP 688 505. However these fats were never applied for lamination purposes.

Therefore we studied whether we could find a lamination fat with excellent lamination properties that still displayed a relatively low SAFA content and that displayed good structuring properties (for which the hardness is a good criterium). In order to decrease the SAFA content it is necessary that the fats contain less of the high SAFA fat components. However these components were considered to be essential for obtaining the required structuring properties. Therefore the skilled man in the art was in a squeeze, i.e. he should reduce the content of highly saturated triglycerides without loosing the structuring properties. We found a solution for above problem. This solution basically being that by using a minimum amount of long chain fatty acids (Arachidic, which radical abbreviated as A and Behenic, which radical abbreviated as B) as Arachidic and in particular Behenic acids in our triglycerides and by incorporating these Arachidic and Behenic acid in triglycerides of the (H2M+H3)-triglyceride type, a fat with a relatively low SAFA content could be obtained that simultaneously performed very well as a lamination fat and that even had a very flat hardness, expressed by (S15-S25)/S20. Due to the lowering of the SAFA, without impairment of product functionality, consequently in these examples significantly increased levels of MUFA and/or PUFA and other EFA (essential fatty acids) are possible. EFA are known for their positive effects in human health.

Therefore our invention concerns in the first place a fat blend, comprising: 70-85 wt%, preferably 75-80 wt % of liquid oil; > 15 wt %, preferably 15-30 wt % of (H2M + H3)-triglycerides, which blend displays:
a SAFA-content of < 50 wt %, preferably < 40 wt %, most preferably ≤ 33 wt % ; an N35 < 35, preferably < 30, most preferably < 27; an N20 of 15-40, preferably 17-30, most preferably 18-28; a Stevens hardness at 20 °C (=S20) > 150 g, preferably > 250 g, most preferably > 300 g, while the blend has a total Arachidic and Behenic content of > 1 wt%, preferably more than 3 wt %, most preferably more than 5 wt %, which total of Arachidic and Behenic content is controlled by the presence of the H2M+H3-component, in particular by the H3 component in the blend, H being saturated fatty acid with 16-24 C atoms, M being saturated fatty acid with 6-14 C atoms, SAFA being the total of saturated and trans fatty acids over the total of fatty acids present, N_{T} being the solid fat content of the fat measured by NMR pulse at the temperature indicated on a non stabilised fat.
For the measurement of N_{T} the following procedure is applied: Melt at 80°C, cool to 0°c and keep it 1 hr at 0°C; heat up to measurement temperature and keep it at this temperature for 1/2 hr.
In fact the best results were obtained with fat blends that comprise < 5 wt %, in particular < 2.5 wt % of S2U triglycerides, S=saturated fatty acid residues with 16-18 carbon atoms, U=unsaturated fatty acid residues.

The fats that we obtain preferably display a hardness profile such that (S15-S25)/S20 = -1 to +1, in particular - 0.8 to 0.8, most preferably - 0.5 to 0.5. The hardness being defined as the Stevens hardness is measured with a Stevens-LFRA Texture Analyzer (ex Stevens Advanced Weighing Systems, Dunmore, UK) using a 4.4 mm diameter cylinder, set at 10 mm penetration depth and operated "normal" with 2.0 mm/s penetration rate. In absolute sense the hardness of our new blends at 20°C i.e. S20 preferably is 150-800 g.
It is possible that our blends have the correct hardness directly obtained from the current process line, however it is also possible that the blends directly obtained from the process line have a hardness S20 below the value required for the application as laminate fat. In that instance the hardness of the fat can be adjusted to the correct (higher) value by subjecting the blends to another type of production process comprising (i) a 2 or 3 step crystallization process and/or (ii) increased residence times in the crystallizers (C-units) and/or (iii) a lowered temperature profile throughout the production line and/or (iv) by subjecting the fresh products to an elongated storage period of at least 1 week, more preferably > 3 weeks at 20°C in order to obtain a complete crystallization of the relevant triglycerides.

The liquid oil component of our new blends displays an N₅ of less than 5 and can preferably be selected from the group consisting of: sunflower oil, high oleic sunflower oil, olive oil, soybean oil, rapeseed oil, safflower oil, high oleic safflower oil, maize oil.

According to another embodiment our invention also concerns puff pastry fat compositions comprising 40-100 wt % fat and balance water and additives, including the ingredients to further improve the functionality of the fat, wherein more than 70 wt % of the fat phase consists of a fat blend according to claims 1-6.

Also puff pastries comprising a fat phase, wherein the fat phase is the puff pastry fat composition of claim 7. are part of our invention.

Part of the invention also are the processes for the preparation of a puff pastry fat composition with the composition according to claim 7, wherein (I) a premix is made of the components of the fat composition at a temperature of 60-80 0C, whereupon the premix is cooled and crystallised using a sequence of cooling and crystallisation units, such that after the cooling units (A-units : Scraped Surface Heat Exchangers) a temperature of < 100C, preferably < 5 0C, most preferably < 0 0C is obtained and non controlled, increased outlet temperatures after the crystallisation units (C-units), due to generated heat of crystallization and frictional heat, are applied and (II) a Split Stream Crystallisation Process (SSCP) is used to separately crystallise the high (N35 > 20) and medium melting (N35 < 10) part of the fat blend before mixing and further processing according to process (I), and wherein the water phase is preferably pre mixed with the high melting fat phase followed by a cooling process similar to (I) and wherein the medium melting phase is not cooled with A and C units but preferably mixed in in the liquid state at moderate temperatures. In these processes total through puts of 1.0 - 4 kg/h can be applied on laboratory scale equipment while throughputs of 30 to 100 kg/h are applied on pilot plant scale equipment.

### EXAMPLES

The following fat blends were made:

| Example | fat composition |
|---|---|
| I | 25 % Rp^{H}-70/75 % SF |
| II | 18 % Rp^{H}-70/5 % PO-58/77 % SF |
| III | 13 % Rp^{H}-70/10 % PO-58/77 % SF |
| IV | 8 % Rp^{H}-70/15 % PO-58/77 % SF |
| V | 15 % Rp^{H}-70/8 % wf-inEs-mid/77 % SF |
| VI | 10% Rp^{H}-70/13% wf-inEs-mid/77 % SF |
| VII | 20 % fat A/80 % indir SF |
| VIII | 9% Rp^{H}-70/17 % PO-58/74 % SF |
| IX | 10.7 % Rp^{H}-70/15.7 % inEs-45/73.6 % SF |

Above fat blends displayed the following characteristics

| Fat | SAFA | N20 | N35 |
|---|---|---|---|
| I | 34 | 25.7 | 22.9 |
| II | 32.2 | 23.4 | 20.2 |
| III | 32.2 | 23.3 | 19.7 |
| IV | 32.2 | 23.2 | 19.3 |
| V | 32.8 | 21.4 | 15.8 |
| VI | 32.7 | 20.4 | 11.4 |
| VII | 29.6 | 25.3 | 13.3 |
| VIII | 34.9 | 26.8 | 23.3 |
| IX | 35.2 | 20.6 | 10.6 |

Above fat blends were applied for the preparation of puff pastry fat compositions applying the conditions set out below.
while composition VIII is also used as VIII', VIII'', VIII''' and VIII'''' by applying other process conditions. The results are:

| Fat | S15 | S20 | S25 | S15-S25/S20 | Bak perf. |
|---|---|---|---|---|---|
| I | 692 | 624 | 603 | 0.14 | + |
| II | 355 | 363 | 411 | -0.15 | + |
| III | 353 | 380 | 437 | -0.22 | + |
| IV | 377 | 402 | 422 | -0.11 | + |
| V | 286 | 322 | 257 | 0.09 | + |
| VI | 293 | 349 | 277 | 0.05 | + |
| VII | 545 | 346 | 259 | 0.83 | + |
| VIII | 334 | 423 | 722 | -0.92 | + |
| IX* | 357 | 287 | 241 | 0.40 | + |

| Fat | S15 | S20 | S25 | S15-S25/S20 | Bak perf |
|---|---|---|---|---|---|
| VIII' | 373 | 474 | 615 | -0.51 | + |
| VIII'' | 469 | 531 | 619 | -0.28 | + |
| VIII''' | 435 | 514 | 639 | -0.40 | + |
| VIII''''* | 757 | 733 | 701 | 0.08 | + |
| VIII'''' | 421 | 519 | 624 | -0.39 | + |

| | | | | | |
|---|---|---|---|---|---|
| * After storage for 5 weeks at 20°C | | | | | |

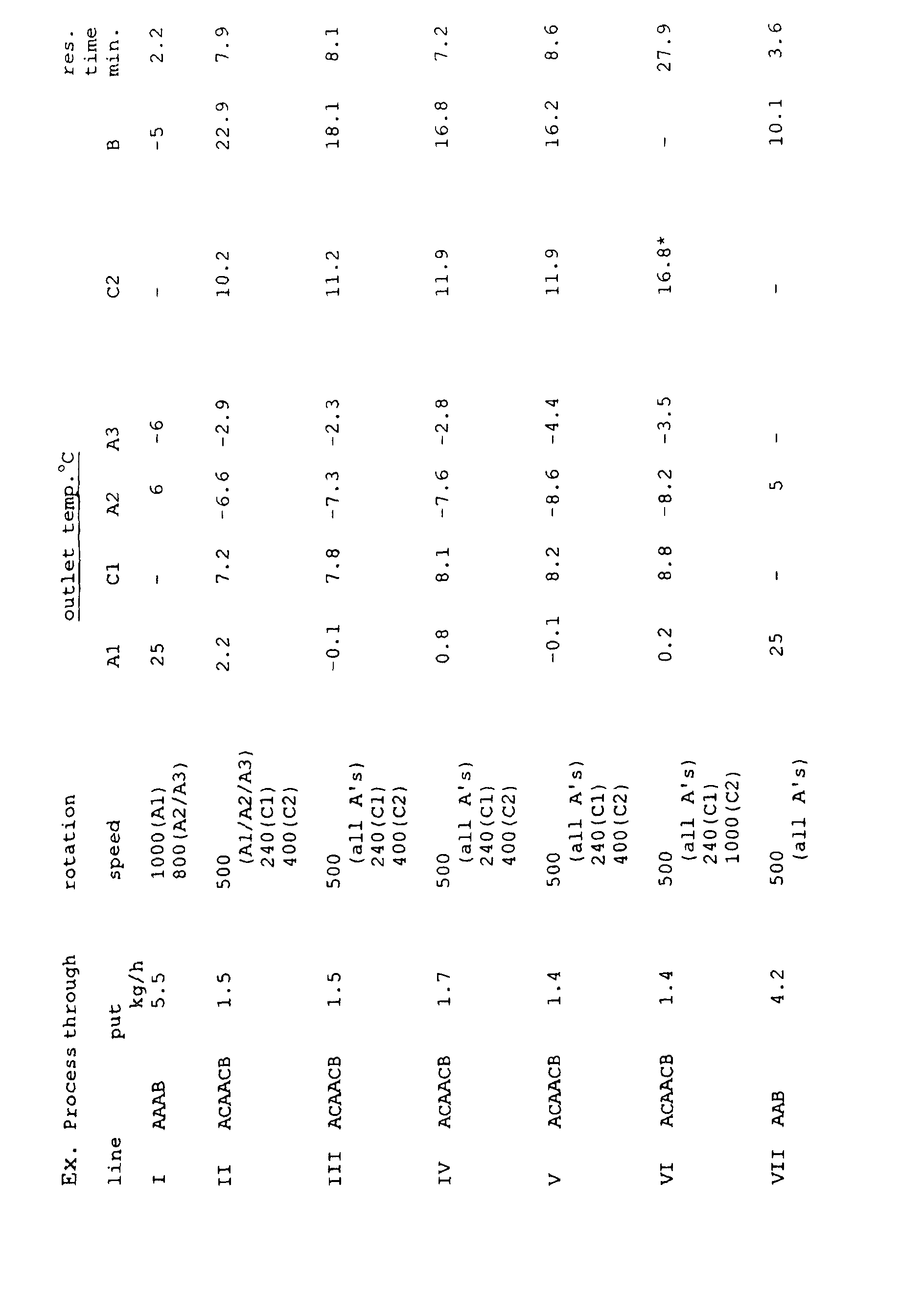

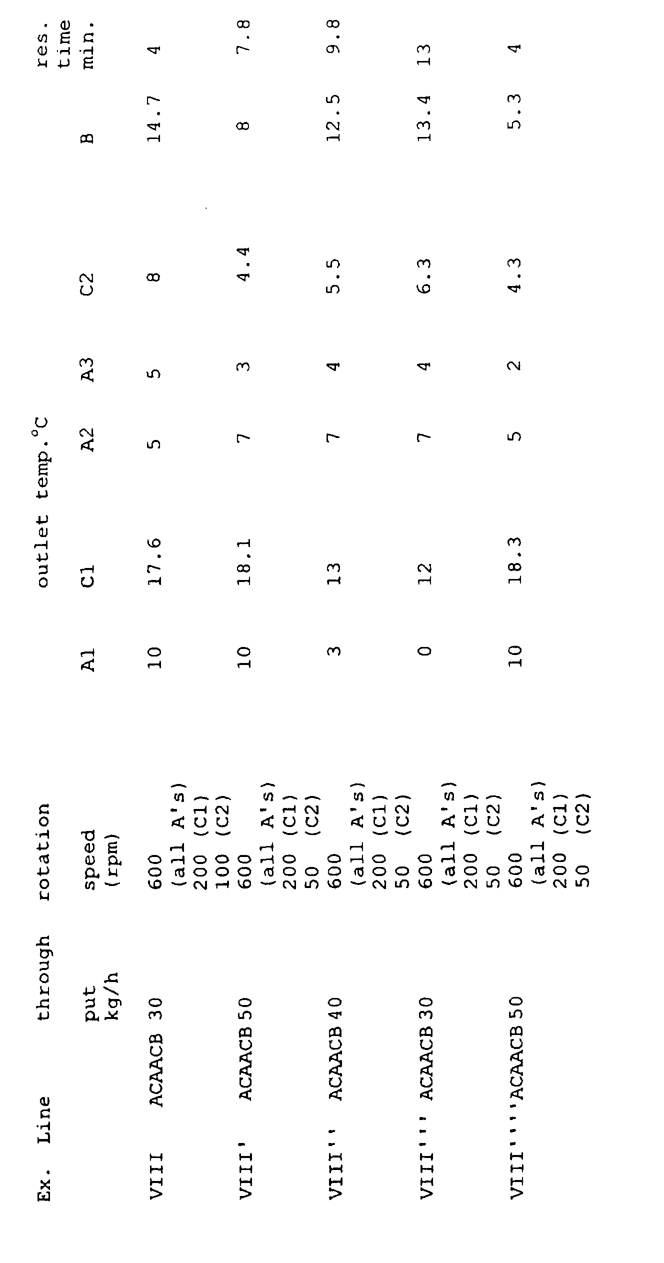

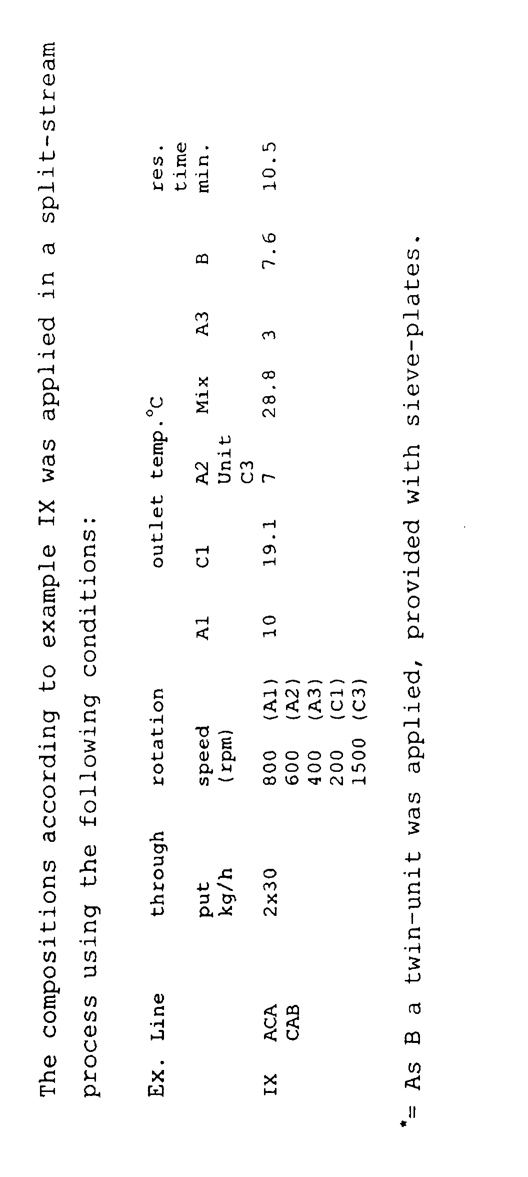

### Explanation of abbreviations used:

Rp^{H}-70= hardened high erucic rape seed oil melt. point 70 °C. containing 38.3% B and 7.8%A.
SF= sunflower oil.
PO-58= hardened palm oil melt.point 58 °C.
inEs.45 = interesterified palm kernel fraction with m.pt 41 °C and hardened palm oil m.pt 58 °C, ratio 47:53.
wfinESmid = mid fraction obtained after double wetfractionation of inES-45.
indir SF = directed interesterified sunflower oil.
in(20 OV/80 Rp-70) = interesterified olive oil and hardened high erucic rape seed oil, m.pt 70 °C.
Fat A = mid-fraction of a double wetfractionation of a
fully hardened enzymically interesterified mixture of Rp^{H}- 70 and lauric fat, having 25.8 % C48 : 10.7 % C50 and 36.8 % C52, rest others.
A = scraped surface heat exchanger.
B = resting tube.
C = crystallizer with pinrotors.

In another set of experiments we compared the performance of a fat according to the invention with the performance of a comparative fat. Both fats contained 8.3 wt% of saturated long chain fatty acid (C₂₀ + C₂₂). In the fats according to the invention this
(C₂₀ + C₂₂) is incorporated via the H3-triglyceride, whereas in the comparative fat this is done via the H2U-triglyceride. In order to be able to do so the amount of liquid oil in the comparative fat has to be lowered to 65%. The fat compositions, its performance and the condition applied during its processing are given below in examples XII and XIII. From the result it can be concluded that only the use of fat according to the invention (=ex XIII) resulted in a good pastry fat.

### EXAMPLES

(long chain via B2U (XII) vs. long chain via B3 (XIII) at comparable level of A+B (8.3%))

| Example | XIII | XII |
|---|---|---|
| liq. oil | 77 | 65 |
| H2M+H3 | 23 | 6 |
| SAFA | 29 | 26 |
| N20 | 22.7 | 12.0 |
| N35 | 20.0 | 5.4 |
| S20 | 462 | 139 |
| %(A+B) | 8.3 | 8.3 |
| long chain via | H3 | H2U |
| A=Arachidic, B=Behenic Fatty Acid | | |

| Example | | | | | fat composition | | | |
|---|---|---|---|---|---|---|---|---|
| XII | | | | | 35%in(50%OV/50%RPH70)/65%RP | | | |
| XIII | | | | | 18%RPH70/5%P058/77%RP | | | |
| | | | | | | | | |

| Fat | SAFA | N20 | N35 | S15 | S20 | S25 | S15-S25 /S20 | Bak.Perf. |
|---|---|---|---|---|---|---|---|---|
| XII | 26 | 12.0 | 5.4 | 175 | 139 | 74 | 0.73 | - |
| XIII | 29 | 22.7 | 20.0 | 419 | 425 | 392 | 0.06 | + |

| Ex. | line | kg/h | speed | T-A1 | T-C1 | T-A2 | T-A3 | T-C2 | T-B | time |
|---|---|---|---|---|---|---|---|---|---|---|
| XII | AA | 40 | 1200 | 10 | - | 0 | - | - | - | - |
| | | | (all A's) | | | | | | | |
| XIII | ACAC | 40 | 1200 | 10 | 17 | 4 | 5 | 5 | - | - |
| | A | | (all A's) 200 | | | | | | | |
| | | | (C1) | | | | | | | |
| | | | 100 | | | | | | | |
| | | | (C2) | | | | | | | |

## Claims

1. Fat blend comprising:
70-85 wt %,preferably 75-80 wt % of liquid oil
> 15 wt %,preferably 15-30 wt % of (H2M+H3)-triglycerides, which blend displays:
a SAFA-content of < 50 wt %, preferably < 40 wt %, most preferably ≤ 33 wt %; an N35 < 35, preferably < 30, most preferably < 27; an N20 of 15-40, preferably 17-30, most preferably 18-28; a Stevens hardness at 20 °C (=S20) > 150 g, preferably > 250 g, most preferably > 300 g while the blend has a total of Arachidic and Behenic content of > 1 wt %, preferably more than 3 wt %, most preferably more than 5 wt %, which total of Arachidic and Behenic content is controlled by the presence of the H2M+H3-component, in particular by the H3 component in the blend, H being saturated fatty acid with 16-24 C atoms, M being saturated fatty acid with 6-14 C atoms, SAFA being the total of saturated and trans fatty acids over the total of fatty acids present, N being the solid fat content of the fat measured by NMR pulse at the temperature indicated on a non stabilised fat.

2. Blend according to claim 1, wherein the blend comprises < 5 wt %, in particular < 2.5 wt% of S2U triglycerides, S=saturated fatty acid residues with 16-18 carbon atoms, U=unsaturated fatty acid residues.

3. Fat blend according to claims 1 or 2, wherein the fat blend displays a hardness profile such that (S15-S25)/S20 = -1.0 to 1.0, in particular - 0.5 to 0.5.

4. Fat blend according to claims 1-3, wherein the liquid oil displays an N₅ <5 and is preferably selected from the group consisting of: sunflower oil, high oleic sunflower oil, olive oil, soybean oil, rapeseed oil, safflower oil, high oleic safflower oil, maize oil.

5. Fat blend according to claims 1-4, wherein the blend displays a hardness S20 of 150-800 g.

6. Fat blend according to claims 1-5, wherein the blend displays a hardness S20 > 150, most preferably of more than 300 and wherein the blend is obtainable by post treating a fat blend with a lower S20 value.

7. Puff pastry fat composition, comprising 40-100 wt % fat and balance water and additives, including the ingredients to further improve the functionality of the fat, wherein more than 70 wt % of the fat phase consists of a fat blend according to claims 1-6.

8. Puff pastries comprising a fat phase, wherein the fat phase is the puff pastry fat composition of claim 7.

9. Process for the preparation of a puff pastry fat composition with the composition according to claim 7, wherein a premix is made of the components of the fat composition at a temperature of 60-80 °C, whereupon the premix is cooled and crystallised using a sequence of cooling and crystallisation units such that after the cooling units a temperature of < 10 °C, preferably < 5 °C, most preferably < 0 °C is obtained and non controlled, increased outlet temperatures after the crystallisation units are used.

10. Process for the preparation of a puff pastry fat composition with the composition according to claim 7, wherein a Split Stream Crystallisation Process (SSCP) is used to separately crystallise or cool the high (N35 > 20) and medium melting (N35 < 10) part of the fat blend before mixing and further processing according to process in claim 9, and wherein the water phase is preferably pre mixed with the high melting fat phase followed by a cooling process similar to the process of claim 9 and wherein the medium melting phase is not cooled with A and C units but preferably mixed in in the liquid state at moderate temperatures using a high speed C-unit.

11. Process according to claim 9, wherein a through put of 1.0-100 kg/h is applied.

## Patentansprüche

1. Fettgemisch umfassend:
70-85 Gew.-%, vorzugsweise 75-80 Gew.-% Flüssigöl
> 15 Gew.-%, vorzugsweise 15-30 Gew.-% (H2M+H3)-Triglyzeride, welches Gemisch zeigt:
einen SAFA-Gehalt von <50 Gew.-%, vorzugsweise <40 Gew.-%, am meisten bevorzugt ≤33 Gew.-%; einen N35 <35, vorzugsweise <30, am meisten bevorzugt <27; einen N20 von 15-40, vorzugsweise 17-30, am meisten bevorzugt 18-28; eine Stevens-Härte bei 20 °C (=S20) >150 g, vorzugsweise >250 g, am meisten bevorzugt >300 g, während das Gemisch einen Gesamtgehalt von Arachin und Behen von >1 Gew.-%, vorzugsweise >3 Gew.-%, am meisten bevorzugt >5 Gew.-% hat, welcher Gesamt-Arachin- und Behen-Gehalt durch das Vorhandensein von der H2M+H3-Komponente kontrolliert wird, insbesondere durch die H3-Komponente in dem Gemisch, wobei H eine gesättigte Fettsäure mit 16-24 C-Atomen ist, M eine gesättigte Fettsäure mit 6-14 C-Atomen ist, SAFA die Gesamtmenge der gesättigten und trans-Fettsäuren relativ zu der Gesamtmenge der vorhandenen Fettsäuren ist, N der Festfettgehalt des Fettes ist, der mittels NMR-Puls bei der Temperatur, die bei einem nicht stabilisierten Fett angebracht ist, gemessenen wird.

2. Gemisch nach Anspruch 1, wobei das Gemisch <5 Gew.-%, insbesondere <2,5 Gew.-% S2U Triglyzeride umfasst, S = gesättigte Fettsäurereste mit 16-18 Kohlenstoffatomen, U = ungesättigte Fettsäurereste.

3. Fettgemisch gemäß den Ansprüchen 1 oder 2, wobei das Fettgemisch ein Härteprofil zeigt, das so beschaffen ist, wie das (S15-S25)/S20 = -1,0 bis 1,0, insbesondere -0,5 bis 0,5.

4. Fettgemisch gemäß den Ansprüchen 1-3, wobei das Flüssigöl einen N₅ <5 zeigt und vorzugsweise ausgewählt ist aus der Gruppe bestehend aus: Sonnenblumenöl, hoch-Olein Sonnenblumenöl, Olivenöl, Sojabohnenöl, Rapssamenöl, Distelöl, hoch-Olein Distelöl, Maisöl.

5. Fettgemisch gemäß den Ansprüchen 1-4, wobei das Gemisch eine Härte S20 von 150-800 g zeigt.

6. Fettgemisch gemäß den Ansprüchen 1-5, wobei das Gemisch eine Härte von S20 >150 zeigt, am meisten bevorzugt von mehr als 300, und wobei das Gemisch erhältlich ist durch Nachbehandlung eines Fettgemisches mit einem geringeren S20-Wert.

7. Blätterteigfettzusammensetzung, umfassend 40-100 Gew.-% Fett und Aufwiegwasser und Zusatzstoffe, einschließlich die Inhaltsstoffe zum weiteren Verbessern der Funktionalität des Fettes, wobei mehr als 70 Gew.-% der Fettphase aus einem Fettgemisch gemäß den Ansprüchen 1-6 besteht.

8. Blätterteige umfassend eine Fettphase, wobei die Fettphase die Blätterteigfettzusammensetzung von Anspruch 7 ist.

9. Verfahren zur Herstellung einer Blätterteigfettzusammensetzung mit der Zusammensetzung nach Anspruch 7, wobei eine Vormischung aus den Komponenten der Fettzusammensetzung bei einer Temperatur von 60-80 °C hergestellt wird, woraufhin die Vormischung unter Verwendung einer Kühlsequenz und Kristallisationseinheiten abgekühlt und kristallisiert wird, sodass nach den Kühleinheiten eine Temperatur von <10 °C, vorzugsweise <5 °C, am meisten bevorzugt <0 °C erhalten wird und nichtkontrollierte, zunehmende Austrittstemperaturen nach den Kristallisationseinheiten verwendet werden.

10. Verfahren zur Herstellung einer Blätterteigfettzusammensetzung mit der Zusammensetzung nach Anspruch 7, wobei ein Spaltstromkristallisationsverfahren (Split Stream Crystallisation Process) (SSCP) verwendet wird, um den hoch- (N35 >20) und mittelschmelzenden (N35 <10) Teil des Fettgemisches getrennt zu kristallisieren oder zu kühlen, bevor er gemäß dem Verfahren nach Anspruch 9 gemischt und weiterverarbeitet wird, und wobei die wässrige Phase vorzugsweise mit der hochschmelzenden Fettphase vorgemischt wird, gefolgt von einem Kühlungsprozess ähnlich dem Verfahren nach Anspruch 9, und wobei die Mittelschmelzphase nicht mit A- und C-Einheiten gekühlt wird, sondern vorzugsweise im flüssigen Zustand bei mäßigen Temperaturen unter Verwendung einer Hochgeschwindigkeits-C-Einheit zugemischt wird.

11. Verfahren nach Anspruch 9, wobei ein Durchsatz von 1,0-100 kg/h angewandt wird.

## Revendications

1. Mélange de matières grasses ou graisses comprenant:
70-85 % en poids, de préférence 75-80 % en poids d'huile liquide;
>15 % en poids, de préférence 15 à 30 % en poids de triglycérides (H2M+H3), ledit mélange présentant:
une teneur en SAFA < 50 % en poids, de préférence < 40 % en poids, tout particulièrement ≤ 33 % en poids, un N35 < 35, de préférence < 30, en particulier < 27; un N20 de 15-40, de préférence 17-30, plus particulièrement 18-28; une dureté Stevens à 20 °C (=S20) > 150 g, de préférence > 250 g, plus particulièrement > 300 g, tandis que le mélange présente une teneur totale en arachidique et béhénique > 1 % en poids, de préférence plus de 3 % en poids, plus particulièrement plus de 5 % en poids, avec une teneur totale en arachidique et béhénique contrôlée par la présence du composant H2M+H3, en particulier par le composant H3 dans le mélange, H étant un acide gras saturé à 16-24 atomes de carbone, M étant un acide gras saturé à 6-14 atomes de C, SAFA étant le total des acides gras saturés et trans par rapport au total d'acides gras présents, N étant la teneur en matière grasse solide de la graisse mesurée par impulsion de RMN à la température indiquée sur une graisse non stabilisée.

2. Mélange selon la revendication 1, dans lequel le mélange comprend < 5 % en poids, en particulier < 2,5 % en poids de triglycérides S2U, S= résidus d'acides gras saturés à 16-18 atomes de carbone, U = résidus d'acides gras insaturés.

3. Mélange de graisses selon la revendication 1 ou 2, dans lequel le mélange de graisse présente un profil de dureté tel que (S15-S25)/S20= -1,0 à 1,0, en particulier -0,5 à 0,5.

4. Mélange de graisse selon l'une quelconque des revendications 1 à 3, dans lequel l'huile liquide présente un N₅ < 5 et est choisie de préférence dans le groupe consistant en huile de tournesol, huile de tournesol à haute teneur oléique, huile d'olive, huile de soja, huile de colza, et huile de carthame, huile de carthame à haute teneur oléique, huile de maïs.

5. Mélange de graisses selon l'une quelconque des revendications 1 à 4, dans lequel le mélange présente une dureté S20 de 150-800 g.

6. Mélange de graisses selon l'une quelconque des revendications 1 à 5, dans lequel le mélange présente une dureté S20 > 150, plus particulièrement supérieur à 300, et dans lequel le mélange peut être obtenu par un post-traitement de mélange de graisses à une valeur de S20 plus basse.

7. Composition de graisse pour pâte feuilletée comprenant 40-100 % en poids de matière grasse ou graisses et le reste étant de l'eau et des additifs, renfermant des ingrédients pour améliorer encore la fonctionnalité de graisse, dans laquelle plus de 70 % de la phase graisseuse consiste en un mélange de graisses selon l'une des revendications 1 à 6.

8. Pâte feuilletée comprenant une phase de matière grasse ou graisse, dans laquelle la phase de graisses est une composition de graisse pour pâte feuilletée selon la revendication 7.

9. Un procédé de préparation d'une composition de graisse pour pâte feuilletée avec la composition selon la revendication 7, dans lequel on prépare un pré-mélange des composants de la composition de graisse à une température de 60-80 °C, puis on refroidit le pré-mélange et on le cristallise en utilisant une succession d'unités de refroidissement et de cristallisation de telle sorte qu'à la sortie des unités de refroidissement, on obtienne une température < 10 °C, de préférence < 5 °C, plus particulièrement < 0 °C et qu'on utilise des températures de sortie non contrôlées plus élevées après les unités de cristallisation.

10. Un procédé de préparation d'une composition de matière grasse ou graisses pour pâte feuilletée avec la composition selon la revendication 7, dans lequel on utilise un procédé de cristallisation à courant fractionné (SSCP) pour cristalliser ou refroidir séparément les fractions à haut point de fusion (N35 > 20) et point de fusion moyen (N35 < 10) du mélange de graisses avant le mélange et le traitement ultérieur selon le procédé de la revendication 9, et dans lequel la phase aqueuse est de préférence mélangée avec la phase graisseuse à haut point de fusion suivie par une opération de refroidissement similaire à l'opération de la revendication 9 et dans laquelle la phase de point de fusion moyen n'est pas refroidie à l'aide des unités A et C mais de préférence mélangée à l'état liquide à température modérée en utilisant une unité C à grande vitesse.

11. Procédé selon la revendication 9, dans lequel on utilise un débit de 1,0-100 kg/h.
